# EUROPEAN PATENT SPECIFICATION

(11) **EP 0 696 142 B1**
(45) Date of publication and mention of the grant of the patent: **12.09.2001**
(21) Application number: 95305297.4
(22) Date of filing: 28.07.1995
(51) Int. Cl.: H04N 9/73

(54) **Control circuit for adjusting cut-off voltage and drive voltage, e.g. for cathode ray tubes, and video equipment incorporating the circuit**
Steuerschaltung zum Einstellen einer Sperrspannung und einer Ansteuerspannung, z.B. für Kathodenstrahlröhren, und diese Schaltung enthaltende Videoausrüstung
Circuit de contrôle pour ajuster une tension de blocage et une tension de commande, applicable e.g. aux tubes à rayons cathodiques, et équipement incorporant un tel circuit

(30) Priority: 05.08.1994 JP 18444394
(43) Date of publication of application: 07.02.1996
(73) Proprietor: MATSUSHITA ELECTRIC INDUSTRIAL CO., LTD., Kadoma-shi, Osaka 571-8501 (JP)
(72) Inventor: Ando, Hiroshi, Ibaraki-shi, Osaka, 567 (JP); Kinugawa, Hiroki, Kusatsu-shi, Shiga, 525 (JP); Sasada, Masahiko, Takasuki-shi, Osaka 569 (JP)
(74) Representative: Crawford, Andrew Birkby

(56) References cited:
- EP-A- 0 481 424

## Description

### BACKGROUND OF THE INVENTION

This invention relates to an adjustment control circuit by which the input signal is adjusted, and relates particularly to a color temperature switching circuit incorporated in the cut-off and drive adjusting circuit of an improved television receiver (hereinafter called TV) or a display monitor.

In accordance to the development of large screen TVS, higher picture qualities are strongly desired, and thus various kinds of adjusting circuits including the cut-off and drive adjusting circuit have been developed.

In adjusting the white-balance which is one of the most important fundamental TV characteristics, the cut-off adjusting circuit adjusting each of the DC levels of three primary color signals, and the drive adjusting circuit adjusting each of the amplitudes of said color signals, are the most important fundamental circuits determining the accuracy of white-balance.

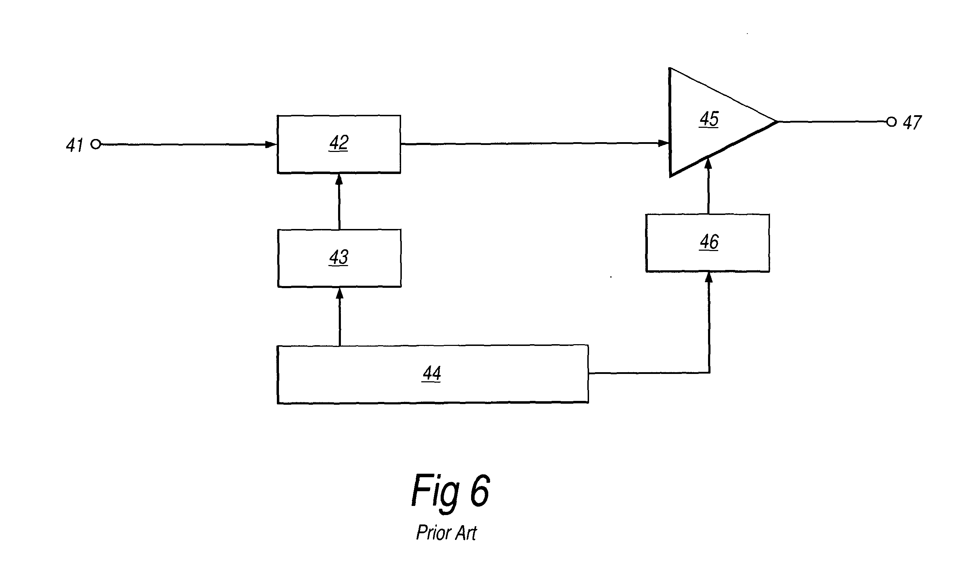

Fig. 6 shows a block diagram of the conventional cut-off and drive adjusting circuits designed for a primary color signal.

In Fig. 6, 41 is a primary color signal, 42 is a cutoff adjusting circuit adjusting the DC level of primary color signal 41, 43 is a cut-off control circuit by which a digital control signal is converted into an analog control signal for controlling the cut-off adjusting circuit 42, 45 is a drive adjusting circuit for adjusting the amplitude of said primary color signal whose DC level is adjusted by cut-off adjusting circuit 42, 46 is a drive control circuit for converting a digital signal into an analog control signal for controlling the drive adjusting circuit 45, 44 is a micro-processor unit (hereinafter called MPU) transmitting said control signals to cut-off control circuit 43 and drive control circuit 46, 47 is an outputted primary color signal with a DC level adjusted by cut-off adjusting circuit 42 and an amplitude adjusted by drive adjusting circuit 45.

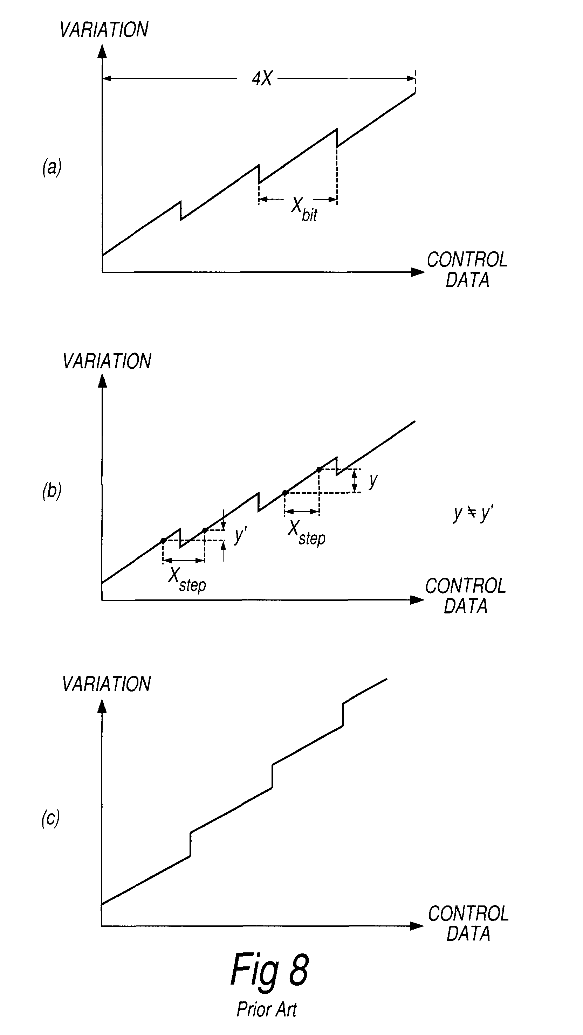

The operation of thus constructed cut-off and drive adjusting circuits is now explained below by referring Fig. 7.

When a primary color signal 41 having a waveform shown in Fig. 7(a) is inputted to cut-off adjusting circuit 42, the DC level of primary color signal 41 is adjusted to a level shown in Fig. 7(b), and the relative amplitude of primary color signal 41 exceeding a predetermined reference range determined by the amplitudes of the other primary color signals is adjusted by drive adjusting circuit 45 yielding a waveform shown in Fig. 7(c).

This signal is then inverted and amplified by an inversion amplifier yielding an output of primary color signal which is fed to the cathode of a Braun-tube of a TV (hereinafter called CRT) on which pictures are displayed. These signal adjustments have to be applied to each of the three primary color signals in order to accomplish the white-balance adjustment of a CRT.

Although the above-mentioned adjustments had been conducted within the inversion amplifier by using a set of variable resistors and other elements before the signal is outputted, the cut-off and drive adjustments of a primary color signal have been implemented recently before feeding the signal to the inversion amplifier, by applying control signals derived from an MPU as shown in the circuit construction shown in Fig. 6. As a result of this, an automatic white-balance adjustment utilizing MPU has been accomplished and a drastical reduction of man-power wasted in the white-balance adjustment work has been realized.

In order to optimize the TV color reproduction according to various video software including movies constituting a main-stream thereof now, the switching of color temperature according to mode of color temperature is performed by switching the cut-off and the drive voltage of the CRT, and this can be performed easily by rewriting the MPU data.

However, in the above-mentioned control circuit, since the control of cut-off and drive adjusting circuits and the control of said color-temperature mode switching are performed by using a common control circuit, the establishment of linear relationship between the inputted digital control signal and the output analog control signal is an essential condition to maintain the resolution of adjustment at its highest level.

In actual cases, however, the control range maintaining the linear relationship is limited. Moreover, while a finer adjustment means a narrower controllable range, a wider control range has to be provided in order to adjust the color temperatures of video equipment comprised of various components of large variations, such as CRTs, at a same level. Thus, the controllable range can be made wider only by adding a DC bias voltage to the analog voltage outputted from the adjust control circuit, and by switching the added DC bias voltage.

These operations can be illustrated by a stepped control characteristic curve shown in Fig. 8(a) obtained with a conventional cut-off or drive control circuit. The four steps in the control characteristic curve are resulting from the application of four different added bias voltages.

The vertical steps shown in Figs. 8(a), 8(b), and 8(c) are causing respective variations of input/output signals of the cut-off adjusting circuit 42 or drive adjusting circuit 45 shown in Fig. 6. Since the input/output characteristics of cut-off adjusting circuit 42 or drive adjusting circuit 45 themselves are linear, the variations of their output signals are linearly related to the control-inputs of cut-off adjusting circuit 42 or drive adjusting circuit 45, ie. the outputs of cut-off control circuit 43 or drive control circuit 46.

However, in this case, it is highly difficult to make these four characteristic curves shown in Fig. 8(a), (b), or (c), of control circuit 43 or 46, into a continuous single line containing no steps because of variations of the input/output conversion characteristics of the control circuit, or variations of the bias voltages to be added.

If the bias voltage to be added is too high, the curve segments forming the control characteristic are shifted upwardly as shown in Fig. 8(c), thus producing regions in which required output values (variations) are unavailable. In order to avoid such a situation, the bias voltages to be added have to be set at values less than the necessary values. Thus, a control characteristic with overlapped steps as shown in Fig. 8(a) has to be produced.

Because of these steps, however, for a step change Xₛₜₑₚ off-set of the inputted control data, an output step variation would take the shown value y' when the cut-off adjusting point is at point "a", shown in Fig. 8(b), while the output step variation would take the shown value of y when the cut-off adjust point is at point "b", thus producing a difference in the output variations obtained in these two cases.

Therefore, the value of off-set has to be readjusted every time mode switching is applied, such as color temperature switching, so that the mode switching is very difficult to perform because of the different off-set values which have to be determined according to the cut-off adjusting point data.

### SUMMARY OF THE INVENTION

Considering these problems described in above, the object of the present invention is to enable adjustment of the control circuit more precisely and at a higher efficiency by providing a further control circuit ( the second control means) having a linear characteristic to make the mode switching easier, in addition to the conventional control circuit (the first control means) provided for general adjustments.

Thus, in order to solve the problem involved with the conventional systems, the invented control circuits for the cut-off and drive adjustments take a new circuit construction having a second control means comprising a cut-off control circuit for the mode switching and a drive control circuit for the mode switching, in addition to the first control means consisting of a cut-off control circuit and a drive control circuit for conventional modes, as defined in the appended claims.

By using the above-described circuit construction, the cut-off and drive adjustments which have to be carried out at every mode switching operation can be omitted since a control circuit dedicated for the mode switching (the second control means) is provided, so that the mode switching can be carried out by using only the related off-set data. For example, the color temperature can be switched by using only the color temperature switching control circuit (the second control means), after performing the conventional white-balance adjustment. As a result of this, the white-balance adjustment and the color temperature switching can be carried out more precisely and easily.

### BRIEF DESCRIPTION OF THE DRAWINGS

### [Fig. 1]

A block diagram of the control circuit for adjustments which is an embodiment of the invention.

### [Fig. 2]

A block diagram of the cut-off and drive adjusting circuits and their respective control circuits which is an embodiment of the invention.

### [Fig. 3]

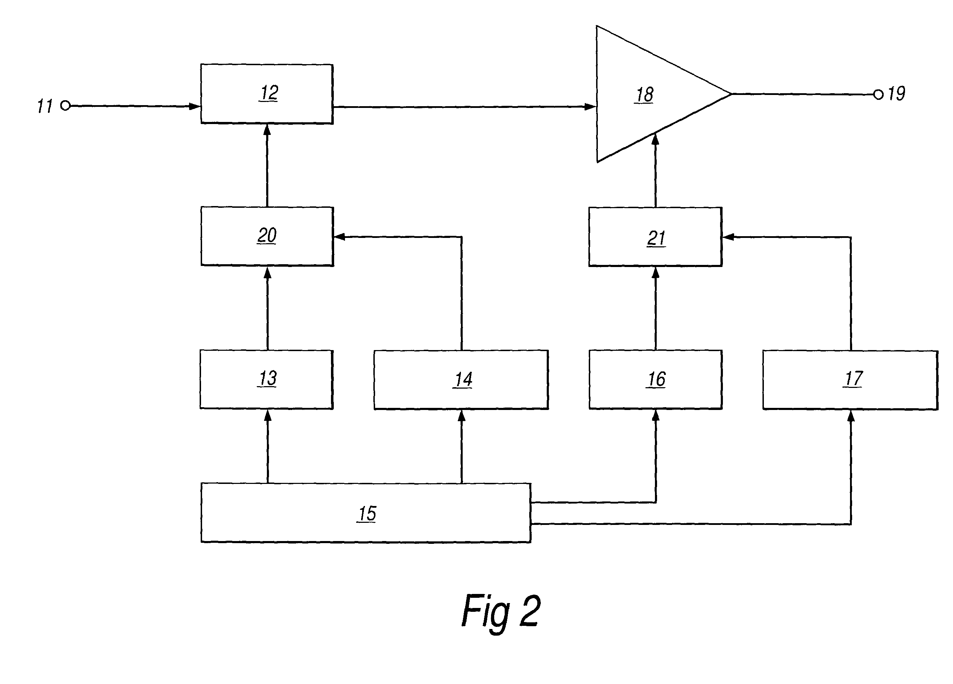

A block diagram of a TV provided with the cut-off and drive adjusting circuits shown in Fig. 2.

### [Fig. 4]

A block diagram of TV-applied video equipment provided with the cut-off and drive adjusting circuits shown in Fig. 2.

### [Fig. 5]

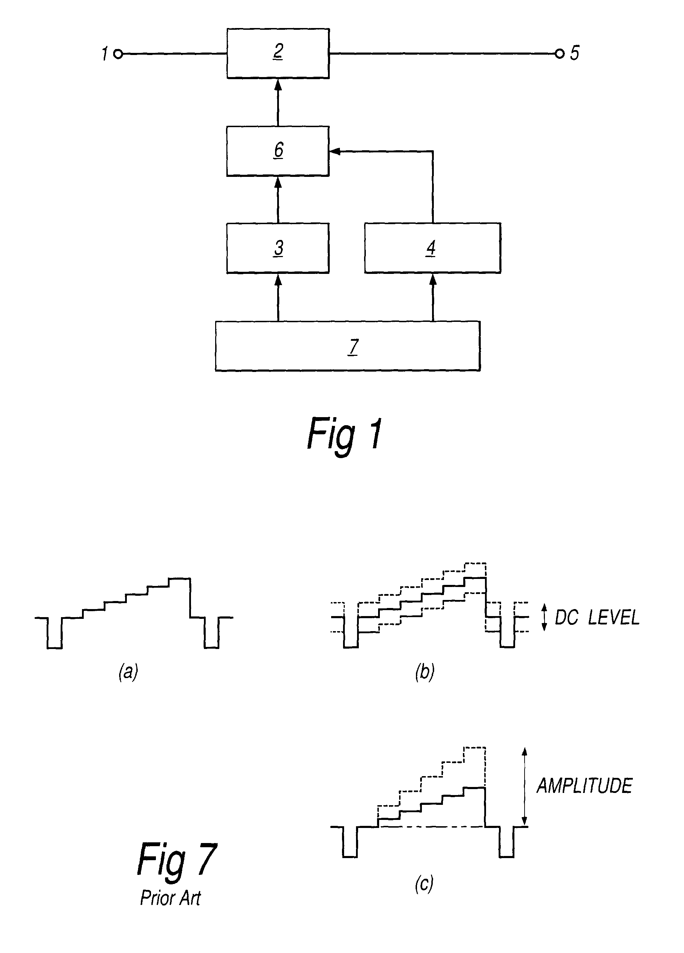

(a) A characteristic of the control circuit for adjustment shown in Fig. 1.
(b) A characteristic of the control circuit for mode switching, constituting a part of the control circuit for adjustment shown in Fig. 1.
(c) An explanation of operation of the control circuit for adjustment shown in Fig. 1.

### [Fig. 6]

A block diagram of a conventional cut-off and drive adjusting circuit.

### [Fig. 7]

(a) A waveform of a primary color signal of the cut-off and drive adjusting circuit.
(b) A waveform of a primary color signal whose DC level is adjusted by the cut-off and drive adjusting circuits.
(c) A waveform of a primary color signal whose amplitude is adjusted by the cut-off and drive adjusting circuits.

### [Fig. 8]

(a) A characteristic of the cut-off and drive adjusting circuits shown in Fig. 6.
(b) An explanation of the off-set operation performed by the cut-off and drive adjusting circuits shown in Fig. 6.
(c) An inappropriate characteristic of the cut-off and drive adjusting circuits shown in Fig. 6.

### 5. DETAILED DESCRIPTION OF THE INVENTION

A first embodiment of the present invention is now explained by referring the attached drawings.

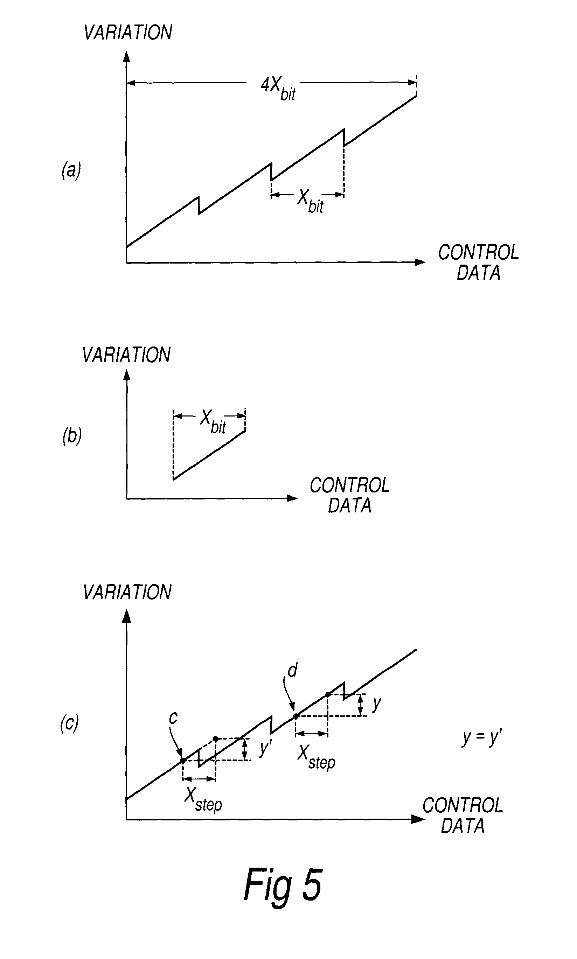

Fig. 1 shows a block diagram of the control circuits for adjustments, which is an embodiment of the invention. In Fig. 1, 1 is an input signal, 2 is an adjusting circuit adjusting the input signal 1, and 3 is an adjust control circuit (the first control means) having a segmented control characteristic obtained by serially connecting m unit control characteristics so as to obtain an output signal by converting an n-bit digital control signal into an analog voltage in accordance with said unit control characteristic (cf. Fig. 5(a)), and by adding a bias voltage thereto (although this is not specified in Fig. 1), wherein n and m are arbitrary natural numbers.

4 is a control circuit for mode switching (part of the second control means) also having said unit control characteristic or having a linear control characteristic controllable by an n-bit digital control signal (cf. Fig.5 (b)), by which said adjusting circuit 2 is controlled besides being controlled by the adjust control circuit 3, 5 is an adjusted output signal, and 6 is a control signal adding circuit adding the output of adjust control circuit 3 to the output of control circuit 4 for mode switching, and 7 is an MPU supplying control signals to both the adjust control circuit 3 and the control circuit 4 for mode switching.

In the thus constructed control circuits for adjustments, even if said adjust control circuit 3 had a discontinuous control characteristics such as the one shown in Fig. 5(a), a step variation corresponding to the input to said control circuit 4 for mode switching can be obtained consistently independent of the adjusting point determined by said adjust control circuit 3, by adding the output of said control circuit 4 for mode switching to the output of said adjust control circuit (first control means) 3.

As a result of this, the same output step can be obtained for the same control data consistently in either ease of adjusting point c or d as shown in Fig. 5(c), and thus, the mode switching can be performed easily and precisely.

A block diagram of the second embodiment of the invention applied to the cut-off adjusting circuit of CRT of video equipment including the mode switching circuit is shown in Fig. 2.

In Fig. 2, 11 is an input primary color signal, 12 is a cut-off adjusting circuit adjusting the DC level of said input primary color signal, 13 is a cut-off control circuit controlling the cut-off adjusting circuit 12, 14 is a cut-off control circuit for mode switching setting a different mode such as a color temperature mode, 20 is a cut-off control signal adding circuit by which the output of said cut-off control circuit 13 is added to the output of said cut-off control circuit 14 for mode switching, 18 is a drive adjusting circuit adjusting the amplitude of primary color signal whose DC level has been adjusted by said cut-off adjusting circuit 12, 16 is a drive control circuit controlling the drive adjusting circuit 18, 17 is a drive control circuit for mode switching setting a different mode such as switching the color temperature mode, 21 is a drive control signal adding circuit by which the output of said drive control circuit 17 for mode switching is added to the output of said drive control circuit 16, 15 is an MPU supplying control signals to the cut-off control circuit 13, drive control signal 16, cut-off control circuit 14 for mode switching, and the mode switching drive control circuit 17, 19 is an output of primary color signal whose DC level is adjusted by said cut-off adjusting circuit 12 and whose amplitude is adjusted by said drive adjusting circuit 18.

In performing the cut-off and drive adjustments using the adjusting circuits shown in Fig. 2, the adjustment of color temperature for a conventional mode is performed by controlling both the adjusting circuit 12 and the adjusting circuit 18 by using the outputs of cut-off control circuit 13 and drive control circuit 16 in order to adjust the color temperature for the conventional mode.

After this, a color temperature switching value for another mode is set and used in both of the cut-off control circuit 14 for mode switching and the drive control circuit 17 for mode switching.

Once the color temperature switching value has been set, since a wider control range in appearance is obtained by the invention despite of steps in the cut-off control characteristic, mode switching based on an arbitrary off-set data value can be performed easily and precisely after the color temperature adjustment in conventional mode has been performed.

Since the situation is the same for the case of drive adjustment, detailed explanations for that are omitted here.

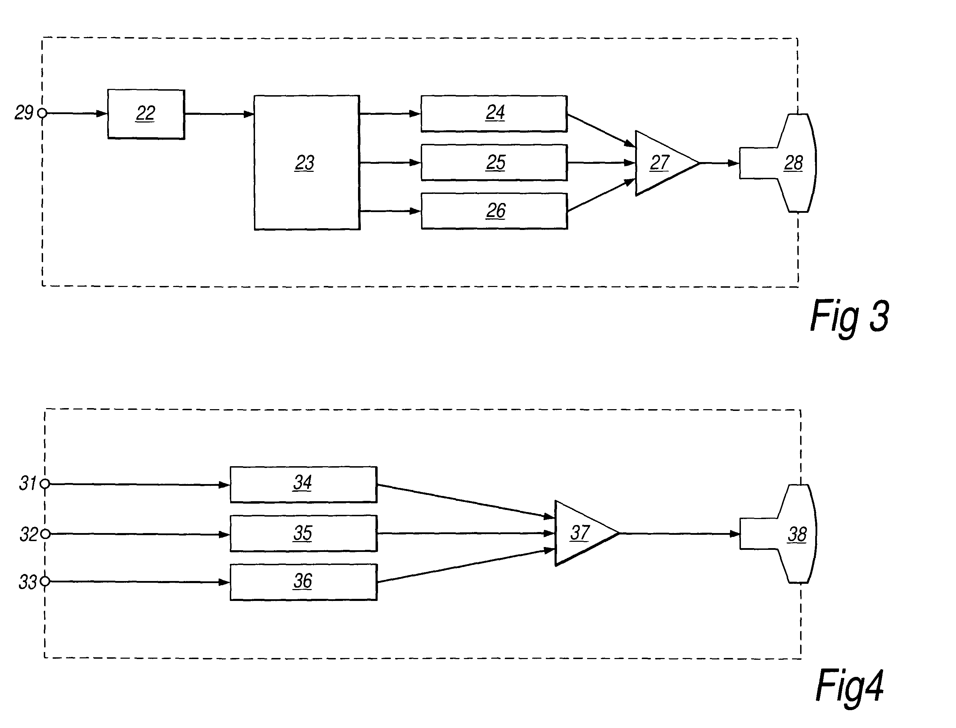

A block diagram of the third embodiment of the invention is now shown in Fig. 3 showing a TV equipped with the cut-off and drive adjusting circuits of the second embodiment of the invention.

In Fig. 3, 29 is a television signal received at antenna, 22 is a tuner circuit of a TV, to which television signal 29 is inputted, 23 is a video signal processing circuit by which the output of tuner circuit 22 is amplified and detected, 24 is a red color signal cut-off and drive adjusting circuit of the second embodiment explained in Fig. 2, into which the red primary color signal outputted from video signal processing circuit 23 is inputted, 25 is a green color signal cut-off and drive adjusting circuit of the second embodiment explained in Fig. 2, into which the green primary color signal outputted from video signal processing circuit 23 is inputted, and 26 is a blue color signal cut-off and drive adjusting circuit of the second embodiment explained in Fig. 2, into which the blue primary color signal outputted from video signal processing circuit 23 is inputted, 27 is an amplifier for amplifying the primary color signals adjusted by using red, green, and blue cut-off and drive adjusting circuits 24, 25, and 26 and for driving a CRT, and 28 is a CRT of a TV, displaying the television pictures.

In the TV of the above-explained construction, similar to the video-equipment of the second embodiment, mode switching after the cut-off adjustment can be performed more easily and more precisely.

A block diagram of the fourth embodiment of the invention is now shown in Fig. 4. This embodiment relates to a TV-applied video equipment displaying pictures on a TV obtained by applying a necessary video processing such as amplification to directly inputted three primary color signals, and to these the cut-off and drive adjustment processes explained in the second embodiment are applied.

Fig. 4 shows the block diagram of the circuit explained in Fig. 3 from which the circuit portions relating to television signal 29, tuner circuit 22, and video signal processing circuit 23 are excluded.

In Fig. 4, 31, 32, and 33 are three input primary color signals of red, green, and blue respectively. 34, 35, and 36 are cut-off and drive adjusting circuits of the second embodiment, performing the cut-off and drive adjustments of said three input primary color signals of red, green, and blue.

37 is an amplifier for amplifying the primary color signals to which the cut-off and drive adjustments are made for inputting these signals to CRT. These adjustments are performed by using the cut-off and drive adjusting circuit 34 for red signals, cut-off and drive adjusting circuit 35 for green signals, and cut-off and drive adjusting circuit 36 for blue signals. 38 is a CRT of video equipment to which the present invention is applied.

In thus constructed TV-applied video equipment, similar to the video equipment of the second and third embodiments, an easier mode switching and a higher exactness thereof can be obtained after having performed the cut-off adjustments.

By taking the circuit constructions shown in the third or fourth embodiments, the control circuit for adjustment according to the invention can be applied not only to a conventional TV but also to TV-applied video equipment such as display monitors.

Moreover, in the above-explained embodiment of the invention, only the switching of color temperature has been explained as an example for the mode switching by which the off-set values of three primary color signals of red, green and blue are set at different values. However, this is applicable to a case where these off-set values of said three primary color signals are independently and individually controlled, and this is applicable also to a user-control case where the instructions for said controls are made externally.

Furthermore, this is effective to not only the case of CRT cut-off and drive adjustments but to a case of switching of the audio frequency characteristics. This invention is effective also to all the adjusting systems with a control circuit having a control characteristic consisting of plural unit control characteristics having an input signal of an arbitrary bit number.

As above-described, by applying the present invention, the operation of mode switching can be performed more easily and more precisely. Moreover, a relatively compact digital/analog converter circuit can be used as the control circuit by providing a control circuit for mode switching shown in Fig. 1 in addition to the conventional control circuit for adjustment, attaining a very high practical value.

## Claims

1. A control circuit for control of an adjusting means (2;12,18) comprising:
a first control means (3;13,16) arranged to receive a first input and to generate a first control signal responsive to said first input signal according to a segmented first input/output characteristic having discontinuous output values at borders between segments and obtained by serially connecting a number m of unit control characteristics each differently shifted by adding a respective different bias value to the output of the respective unit control characteristic;
a second control means (4;14,17) arranged to receive a second input signal and to generate a second control signal responsive thereto according to a second input/output characteristic, said second input/output characteristic being linear, with no inflection points in the operative range of said second input signal; and
adding means (6;20,21) arranged to add said first control signal and said second control signal to generate an output signal for said control of said adjusting means.

2. A control circuit according to claim 1 in which said first input comprises an n-bit signal and said first means comprises conversion means arranged to convert said n-bit signal to an analog signal in accordance with said unit control characteristic, and in which said segmented first input/output characteristic is obtained by serially connecting a plurality of individual characteristic lines each obtained by adding a different bias voltage to the analog signal output by said conversion means.

3. A control circuit according to claim 2 in which said first input signal is an m*n-bit signal, where m is the number of said individual characteristic lines in said first input/output characteristic.

4. Cut-off and drive adjusting means for a CRT of video equipment, the adjusting means comprising two control circuits (13,14,20;16,17,21) according to any of claims 1 to 3 for control of cut-off adjusting circuits and drive adjusting circuits, wherein
said first control means (13,16) are arranged to perform cut-off and drive adjustments respectively; and
said second control means (14,17) in conjunction with said adding means (20,21) are arranged to perform colour temperature switching for said cut-off adjusting circuits and drive circuits respectively.

5. Video equipment comprising the cut-off and drive adjusting means according to claim 4.

6. Video equipment according to claim 5 including a cathode ray tube (CRT) and an amplifier arranged to amplify video signals for display by said CRT.

7. Video equipment according to claim 6 further comprising a tuner circuit arranged to receive television signals, and a video-signal processing circuit arranged to process a signal output by said tuner circuit and to provide video signals to said amplifier.

## Patentansprüche

1. Steuerschaltung zum Ansteuern einer Einstellvorrichtung (2; 12, 18) mit:
einer ersten Steuereinrichtung (3; 13, 16) zum Empfangen eines ersten Eingangssignals und zum Erzeugen eines ersten Steuersignals als Reaktion auf das erste Eingangssignal gemäß einer segmentierten Eingangs-/Ausgangscharakteristik, welche diskontinuierliche Ausgangswerte an den Grenzen zwischen den Segmenten aufweist und durch seriellen Anschluss von einer Anzahl n unterschiedlich verschobener Einheiten-Steuercharakteristika entsteht, indem eine jeweils andere Vorspannung an das Ausgangssignal der jeweiligen Einheiten-Steuercharakteristik angelegt wird;
einer zweiten Steuereinrichtung (4; 14, 17) zum Empfangen eines zweiten Eingangssignals und zum Erzeugen eines zweiten Steuersignals als Reaktion darauf gemäß einer zweiten Eingangs-/Ausgangscharakteristik, wobei die zweite Eingangs-/ Ausgangscharakteristik linear verläuft und keine Wendepunkte im operativen Bereich des zweiten Eingangssignals aufweist, und
einer Addiervorrichtung (6; 20, 21) zum Addieren des ersten Steuersignals und des zweiten Steuersignals, um daraus ein Ausgangssignal zum Ansteuern der Einstellvorrichtung zu erzeugen.

2. Steuerschaltung nach Anspruch 1, wobei das erste Eingangssignal ein n-Bit-Signal ist und die erste Einrichtung eine Umwandlungsvorrichtung zum Umwandeln des n-Bit-Signals in ein analoges Signal entsprechend der Einheiten-Steuercharakteristik umfasst, wobei man die segmentierte erste Eingangs-/Ausgangscharakteristik durch seriellen Anschluss einer Mehrzahl einzelner Kennlinien erhält, von denen jede durch Anlegen einer anderen Vorspannung an das von der Umwandlungseinrichtung ausgegebene analoge Signal entsteht.

3. Steuerschaltung nach Anspruch 2, wobei das erste Eingangssignal ein m*n-Bit-Signal ist, wobei m die Anzahl der Anzahl der einzelnen Kennlinien in der ersten Eingangs-/Ausgangscharakteristik ist.

4. Sperr- und Steuerspannungs-Einstellvorrichtung für eine CRT einer Videoanlage, wobei die Einstellvorrichtung aus zwei Steuerschaltungen (13, 14, 20; 16, 17, 21) nach einem der Ansprüche 1 bis 3 zum Ansteuern der Sperrspannungs-Einstellschaltungen und der Steuerspannungs-Einstellschaltungen besteht, wobei
die erste Steuereinrichtung (13, 16) dem Einstellen der Sperr- bzw. der Steuerspannung dient und
die zweite Steuereinrichtung (14, 17) zusammen mit der Addiervorrichtung (20, 21) dazu dient, die Farbtemperaturumschaltung für die Sperrspannungs-Einstellschaltung bzw. die Steuerspannungs-Schaltung durchzuführen.

5. Videoanlage mit Sperr- und Steuerspannungs-Einstellvorrichtung nach Anspruch 4.

6. Videoanlage nach Anspruch 5 mit einer Kathodenstrahlröhre (CRT) und einem Verstärker zum Verstärken von Videosignalen zum Anzeigen mittels CRT.

7. Videoanlage nach Anspruch 6, weiterhin mit einer Tunerschaltung zum Empfangen von Fernsehsignalen und einer Videosignal-Verarbeitungsschaltung zum Verarbeiten eines Ausgangssignals mittels Tunerschaltung und zum Bereitstellen von Videosignalen an den Verstärker.

## Revendications

1. Circuit de commande pour commander des moyens d'ajustement (2; 12, 18) comprenant:
des premiers moyens de contrôle (3; 13, 16) agencés de manière à recevoir un premier signal d'entrée et produire un premier signal de commande en réponse audit premier signal d'entrée conformément à une première caractéristique segmentée d'entrée/sortie possédant des valeurs de sortie discontinues au niveau de limites entre des segments et obtenue par raccordement en série d'un nombre m de caractéristiques de contrôle unités, qui sont décalées chacune différemment par addition d'une valeur de polarisation respective différente au signal de sortie de la caractéristique respective de contrôle unité;
des seconds moyens de contrôle (4; 14, 17) agencés de manière à recevoir un second signal d'entrée et à produire un second signal de contrôle en réponse à cela conformément à une seconde caractéristique d'entrée/sortie, ladite seconde caractéristique d'entrée/sortie étant linéaire, sans point d'inflexion dans la gamme de fonctionnement dudit second signal d'entrée; et
des moyens d'addition (6; 20, 21) agencés de manière à additionner ledit premier signal de contrôle et ledit second signal de contrôle pour produire un signal de sortie pour ladite commande desdits moyens d'ajustement.

2. Circuit de commande selon la revendication 1, dans lequel ladite première entrée comprend un signal à n bits et lesdits premiers moyens comprennent des moyens de conversion agencés de manière à convertir ledit signal à n bits en un signal analogique conformément à ladite caractéristique de commande unité, et dans lequel ladite première caractéristique segmentée d'entrée/sortie est obtenue par raccordement en série d'une pluralité de courbes caractéristiques individuelles obtenues chacune par addition d'une tension de polarisation différente au signal analogique délivré par lesdits moyens de conversion.

3. Circuit de commande selon la revendication 2, dans lequel ledit premier signal d'entrée est un signal à m*n bits, m étant le nombre desdites lignes caractéristiques individuelles dans ladite première caractéristique d'entrée/sortie.

4. Moyens d'ajustement de coupure et de contrôle pour un tube cathodique d'un appareil vidéo, les moyens d'ajustement comprenant deux circuits de commande(13, 14, 20; 16, 17, 21) selon l'une quelconque des revendications 1 à 3 pour la commande de circuits d'ajustement de coupure et de circuits d'ajustement de contrôle, dans lesquels
lesdits premiers moyens de contrôle (13, 16) sont agencés de manière à exécuter respectivement des ajustements de coupure et de contrôle; et
lesdits seconds moyens de contrôle (14, 17) en liaison avec lesdits moyens d'addition (20, 21) sont agencés de manière à exécuter une commutation de température de couleur respectivement pour lesdits circuits d'ajustement de coupure et lesdits circuits d'ajustement de contrôle.

5. Appareil vidéo comprenant les moyens d'ajustement de coupure et de ce contrôle selon la revendication 4.

6. Appareil vidéo selon la revendication 5, incluant un tube cathodique (CRT) et un amplificateur agencé de manière à amplifier lesdits signaux pour un affichage par ledit tube cathodique.

7. Appareil vidéo selon la revendication 6, comprenant en outre un circuit formant tuner pour recevoir des signaux de télévision, et un circuit de traitement de signaux vidéo agencé de manière à traiter un signal délivré par ledit circuit formant tuner et envoyer des signaux vidéo audit amplificateur.
